# EUROPÄISCHE PATENTSCHRIFT

(11) **EP 1 745 900 B1**
(45) Veröffentlichungstag und Bekanntmachung des Hinweises auf die Patenterteilung: **26.08.2009**
(21) Anmeldenummer: 06117146.8
(22) Anmeldetag: 13.07.2006
(51) Int. Cl.: B27M 3/00, B32B 21/10, B32B 7/08, E04C 2/12

(54) **Schichtverbundelement sowie Verfahren zum Herstellen eines Schichtverbundelements**
Laminated element and method for manufacturing a laminated element
Elément stratifié et procédé de fabrication d'un élément stratifié

(30) Priorität: 19.07.2005 CH 11982005; 07.09.2005 CH 14612005
(43) Veröffentlichungstag der Anmeldung: 24.01.2007
(73) Patentinhaber: Nägeli AG, 9056 Gais (CH)
(72) Erfinder: Nägeli, Johannes, 9056 Gais (CH); Wirz, Felix, 9426 Lutzenberg (CH); Steinmann, Urs, 9658 Wildhaus (CH)
(74) Vertreter: Wenger, René

(56) Entgegenhaltungen:
- EP-A- 0 018 328
- EP-A- 1 321 598
- WO-A-00/03850
- DE-A1- 19 604 433
- DE-U1- 20 013 246

## Beschreibung

Die Erfindung betrifft ein Schichtverbundelement gemäss dem Oberbegriff von Anspruch 1 sowie ein Verfahren zum Herstellen eines Schichtverbundelements gemäss dem Oberbegriff von Anspruch 12. Derartige Schichtverbundelemente werden in der Praxis vorzugsweise als Wand-, Decken- oder Dachelemente für Gebäude eingesetzt. Die Elemente sollen dabei einfach und kostengünstig herstellbar sein und die bauphysikalischen Anforderungen bezüglich Tragkraft, Alterungsbeständigkeit, Schalldämmung, Wärmedämmung usw. erfüllen. In zunehmendem Masse sollen auch ökologische Kriterien beispielsweise im Hinblick auf nachwachsende Rohstoffe, Entsorgung usw. berücksichtigt werden.

Gattungsmässig vergleichbare Schichtverbundelemente sind insbesondere aus Holzwerkstoffen seit langem bekannt und gebräuchlich. So beschreibt beispielsweise die CH 692 391 ein Mehrschicht-Bretterelement aus Massivholzriemen, welche zu Schichten zusammengefügt sind, wobei die Schichten gegenseitig vernagelt bzw. verdübelt sind. Im Gegensatz zu verleimten Mehrschichtplatten soll dabei ein gewisser Schlupf der einzelnen Riemen untereinander ermöglicht werden, so dass sich ein Restschwund oder eine Restquellung einzelner Riemen nicht auf das ganze Element überträgt.

Durch die EP 1 097 032 (=WO 00/03850) ist ein vorgefertigtes Schichtholzelement bekannt geworden, das einstofflich aufgebaut ist und nur aus Holz besteht und bei dem die Verbindung der einzelnen Lagen durch Dübel erfolgt, welche die Lagen von Hölzern durchsetzen. Auf diese Weise soll ein Schichtholzelement geschaffen werden, welches vollständig ohne chemische oder metallische Bindemittel hergestellt werden kann, so dass Rest- und Altteile problemlos entsorgt werden können. Im Gegensatz zu verleimten Schichtholzelementen soll ausserdem der Aufbau einer Diffusionssperre durch den Bindungsstoff vermieden werden.

Durch die EP 1 321 598 ist ein Verbundbauteil bekannt geworden, das aus mehreren, miteinander verbundenen Schichten von nebeneinander angeordneten länglichen Elementen besteht, deren Ausrichtung von Schicht zu Schicht unterschiedlich ist. Die einzelnen Schichten werden durch nichthölzerne Verbindungsmittel insbesondere aus Metall zusammengehalten. Zwischen die einzelnen Schichten kann eine dichtende Zwischenlage eingelegt sein, die aus einer dichten Kunststoff-Folie oder einem diffusionsoffenen, winddichten Papier oder dergleichen besteht.

Die bekannten Schichtholzelemente weisen verschiedene Nachteile auf. Insbesondere können sie die immer höheren Anforderungen an Dämmung gegenüber äusseren Einflüssen wie etwa Wärme, Wind, Schall schwer oder nicht mehr erfüllen.

Ein Problem bei der Herstellung von ausschliesslich mechanisch fixierten Schichtverbundelementen besteht darin, dass die Lage der einzelnen Hölzer beim Schichtaufbau bis zum endgültigen Einbringen der Verbindungsmittel fixiert werden muss. Insbesondere beim Einbringen von Dübeln müssen die Dübellöcher am Stapel in einer Maschineneinspannung gebohrt werden. Die nur lose aufeinander liegenden Hölzer können sich bei der Vorbereitung des Bohrprozesses verschieben, wodurch Spalte und Öffnungen zwischen den Hölzern entstehen können. Im Extremfall können sich gar einzelne Hölzer übereinander schieben. Ein weiterer Nachteil der bekannten Schichtverbundelemente ist darin zu sehen, dass eine vollflächige Klebstoffschicht zwar wegfällt, dass aber je nach Fügegenauigkeit und Schwund der einzelnen Hölzer Ritzen und Öffnungen in den einzelnen Lagen entstehen können, welche bei ungünstiger Paarung der einzelnen Lagen einen durchgehenden Kanal bilden können.

Es ist daher eine Aufgabe der Erfindung, ein Schichtverbundelement der eingangs genannten Art zu schaffen, das sich durch verbesserte Dämmwerte insbesondere bezüglich Wärmedurchgang, Wind und Schall auszeichnet. Sodann soll es einfach in der Herstellung sein. Diese Aufgabe wird mit einem Schichtverbundelement mit den Merkmalen im Anspruch 1 sowie mit einem Verfahren mit den Merkmalen im Anspruch 12 gelöst.

Die Zwischenschicht verbessert die Dämmung bezüglich Winddichtigkeit, Schall, Geruch und Wärmedurchgang. Grundsätzlich ist jedes Material als Zwischenschicht geeignet, welches eine bauphysikalisch sinnvolle Dampfdiffusion gewährleistet. Die Zwischenschicht kann als Folie oder auch als starre oder flexible Platte eingebracht werden. So könnte es sich beispielsweise auch um eine Weichfaserplatte handeln.

Die Zwischenschicht besteht vorteilhaft aus einem Naturstoff, insbesondere aus einem Faservlies oder aus einem Gewebe. Als Vliesmaterial kommt insbesondere Filz wie z.B. ein Wollfilz, Flachsfilz, Hanffilz oder auch ein Vliesmaterial aus tierischen Haaren in Betracht. Weitere Materialien für die Zwischenschicht sind Papier oder Karton. Selbstverständlich könnte das Vlies auch aus mineralischen Materialien bestehen. Derartige Materialien sind dem Fachmann beispielsweise unter der Bezeichnung "Steinwolle" bekannt. Je nach dem verwendeten Material für die Zwischenschicht kann diese von einem Haftmittel ganzflächig oder teilflächig durchsetzt sein.

In bestimmten Fällen können mit der Zwischenschicht neben der verbesserten Winddichtigkeit auch noch andere Effekte erzielt werden. So könnte beispielsweise die Zwischenschicht elektrisch leitfähig und/oder elektromagnetische Strahlung abschirmend ausgebildet sein. Auf diese Weise könnte Elektrosmog, beispielsweise verursacht durch Hochspannungsleitungen, vom Gebäudeinneren fern gehalten werden. Ein derart ausgerüstetes Gebäude wäre beispielsweise auch abhörsicher bei der Verwendung von Funktelefonen im Gebäude. Entsprechende Gewebe oder Folien mit diesen Eigenschaften sind dem Fachmann bereits bekannt.

Vorteilhaft kann es sein, wenn wenigstens zwei Zwischenschichten vorgesehen sind, die zwischen zwei verschiedenen Lagen angeordnet sind. Durch diese auf zwei Ebenen befindlichen Zwischenschichten können die bauphysikalischen Eigenschaften des Schichtverbundelements weiter verbessert werden.

Die wenigstens zwei Zwischenschichten können hinsichtlich Dicke und/oder Materialzusammensetzung unterschiedlich aufgebaut sein. Eine Zwischenschicht kann beispielsweise aus einem Faservlies und die andere Zwischenschicht kann beispielsweise aus einem Gewebe aus Kupferdraht zur Abschirmung gegenüber elektromagnetischer Strahlung bestehen.

Zur weiteren Erhöhung insbesondere des Wärmedämmwerts des Schichtverbundelements können die Hölzer und/oder das Schichtverbundelement als Ganzes durch Beaufschlagung einer Kombination mit Wasser und Kalk vorzugsweise in Form von Calciumhydroxid behandelt sein. Somit können also die Hölzer und/oder das Schichtverbundelement mit einer Schutzschicht enthaltend Kalk überzogen sein. Eine Imprägnierung mit Wasser, in welches eine verhältnismässig geringe Menge von Kalk eingebracht ist, ist ebenfalls vorstellbar. Je nach gewünschten Eigenschaften kann eine Lösung ("Kalkwasser") oder eine Suspension ("Kalkmilch") zur Beaufschlagung verwendet werden.

Als vorteilhaft hat es sich in bestimmten Fällen ausserdem erwiesen, wenn die als Verbindungsmittel dienenden Dübel eine aussen liegende Lage nur teilweise durchdringen. So bleibt die Aussenseite dieser Lage frei von sichtbaren Dübellöchern. Andererseits können die Dübel aber auch auf einer Seite aus dem Element herausragen, was beispielsweise der rutschfesten Fixierung von Isoliermaterial oder Putz dienen kann. Zum Erzielen eines formschlüssigen Verbundes der Lagen können die Dübel die Lagen in unterschiedlichen Richtungen durchdringen. Die Anordnung der Dübel erfolgt bezogen auf das gesamte Element vorzugsweise in einem bestimmten Raster. Die Dübel können einen profilierten Aussenmantel, beispielsweise einen schraubenförmig profilierten Aussenmantel aufweisen, womit das Eindringen erleichtert und die Haftung verbessert wird. Als Material für die Dübel eignet sich Hartholz.

Besonders vorteilhaft kann es sein, wenn die Hölzer wenigstens einer Lage wenigstens auf einer innerhalb des Schichtverbundelements liegenden Seite mit muldenartigen Vertiefungen versehen sind bzw. werden. Diese Vertiefungen bilden Lufttaschen, welche die Isolation, insbesondere die Wärmeisolation weiter verbessern. Im Gegensatz zu durchgehend eingefrästen Schlitzen haben die Mulden den Vorteil, dass keine Durchströmung stattfinden kann bzw. dass beim Bearbeiten der Elemente die eingefrästen Nuten nicht angeschnitten werden. Das Anbringen der Vertiefungen kann beispielsweise durch Einprägen mit einer Prägewalze oder dergleichen erfolgen. Ein weiterer Vorteil dieser Anordnung ist, dass bei Verwendung von komprimierbarem Vliesmaterial das Vliesmaterial nach Zusammenpressen der Lagen die Vertiefungen wenigstens teilweise ausfüllen kann.

Zwischen den einander zugewandten Oberflächen der Lagen kann ein die Lagen zusätzlich verbindendes Haftmittel eingebracht sein. Denn es hat sich überraschend gezeigt, dass durch das Einbringen eines flüssigen oder pastösen Haftmittels zwischen die einzelnen Lagen eine ausreichende Fixierung erzielt werden kann, bevor die endgültige Einspannung für das Einbringen der Verbindungsmittel bzw. für das Bohren der Dübellöcher und für das Einpressen der Dübel erfolgt. Auf diese Weise kann die Herstellung des Schichtverbundelements wesentlich vereinfacht werden. Ausserdem wird die Haftung der einzelnen Lagen untereinander zusätzlich zur mechanischen Verbindung weiter verbessert. Es genügt dabei eine Haftung zwischen den Hölzern der einzelnen Schichten, welche ein seitliches Verschieben der Hölzer mit geringem Kraftaufwand verringert. Es braucht sich dabei nicht zwingend um einen Klebstoff im eigentlichen Wortsinn zu handeln. Ein erst nach längerer Zeit aushärtender Klebstoff wäre aber ebenfalls denkbar. Die mechanische Stabilität wird hauptsächlich durch die mechanischen Verbindungsmittel gewährleistet, wobei das zwischen den einzelnen Lagen verbleibende Haftmittel die Haftung lediglich zusätzlich unterstützt. Ausserdem wird damit ein Aneinanderreiben der Schichten bei Wärmeausdehnung und ein dabei entstehendes Knarren verhindert. Die Verwendung von solchen Haftmitteln für das Schichtverbundelement oder für das Verfahren zur Herstellung des Schichtholzelements könnte für sich alleine eine Erfindung sein. Eine Kombination des Haftmittels mit einer Zwischenschicht ist daher nicht zwingend erforderlich.

Die Zwischenschicht kann vom Haftmittel ganzflächig oder teilflächig durchsetzt sein. Der Auftrag von beispielsweise Klebstoff muss also nicht zwingend vollflächig erfolgen.

Beim Haftmittel kann es sich vorzugsweise um einen natürlichen Stoff oder um ein natürliches Stoffgemisch handeln. Als besonders preiswertes Haftmittel, mit welchem hervorragende Eigenschaften erzielt werden konnten, hat sich Melasse erwiesen. Denkbar wären aber ohne weiteres auch andere pflanzliche, tierische oder mineralische Haftmittel wie z.B. Kasein, Gluten, Fischkleister, Glukose, Harze, Stärkesirup, Honig, Kautschuk, Kitt, Zuckerrohrsirup, Schellack oder Gelatine. Aber auch alle klassischen Leime gemäss DIN 16920 kommen in Betracht.

Die Verbindungsmittel sind Holzdübel. Diese können die Lagen vollständig oder teilweise durchdringen. Die Dübel können zum Erzielen eines formschlüssigen Verbundes der Lagen diese in unterschiedlichen Richtungen durchdringen. Ein Dübel kann beispielsweise in einem Neigungswinkel von 20° zur Flächennormalen des Verbundelements angeordnet sein. Die Dübel können einen profilierten Aussenmantel aufweisen.

In verfahrensmässiger Hinsicht kann es sodann vorteilhaft sein, wenn beim Verdübeln der einzelnen Lagen , die Oberfläche der Dübel vor dem Einpressen in die Bohrlöcher ebenfalls mit einem Haftmittel beschichtet werden. Damit wird einerseits die Einführung der Dübel erleichtert, weil das Haftmittel die Reibung beim Einpressen reduziert. Im eingepressten Zustand verbessert das Haftmittel jedoch die kraftschlüssige Verbindung.

Aus ökologischen Gründen ist es besonders vorteilhaft, wenn Dübel aus Holz verwendet werden. Um eine besonders feste kraftschlüssige Verbindung zu erzielen, werden die Dübel vor dem Einsetzen in die Bohrlöcher im Durchmesser mechanisch verdichtet. Bedingt durch das Rückstellvermögen quillt das Material im Bohrloch wieder auf und verspannt sich kraftschlüssig. Gemäss der eingangs erwähnten EP 1 097 032 wird der Feuchtigkeitsgehalt der Holzdübel unter den Feuchtigkeitsgehalt der Hölzer der Lagen abgesenkt, so dass nach dem Einsetzen der getrockneten Dübel in die Bohrlöcher ein Holzfeuchteausgleich und damit ein Quellen der Dübel stattfindet. Dieses Verfahren ist jedoch aufwendig und erfordert eine permanente Berücksichtigung der je nach Jahreszeit unterschiedlichen Luftfeuchte.

Weitere Einzelmerkmale und Vorteile der Erfindung ergeben sich aus der nachfolgenden Beschreibung eines Ausführungsbeispiels und aus den Zeichnungen. Es zeigen:
- Figur 1: eine perspektivische Darstellung eines Schichtverbundelements mit freigelegten Schichten,
- Figur 2: ein Querschnitt durch ein Schichtverbundelement mit unterschiedlich eingesetzten Dübeln,
- Figur 3: einen Querschnitt durch ein Schichtverbundelement mit zwei Zwischenschichten
- Figur 4: eine schematische Darstellung von zwei Lagen sich kreuzender Hölzer beim Schichtaufbau,
- Figur 5: eine schematische Darstellung eines Prägerades zum Einprägen von Mulden,
- Figur 6: die schematische Darstellung eines Dübels beim Verdichten,
- Figur 7: die schematische Darstellung eines Dübels beim Beschichten,
- Figur 8: die schematische Darstellung einer alternativen Methode zur Verdichtung eines Dübels, und
- Figur 9: eine schematische Darstellung einer alternativen Methode zur Beschichtung eines Dübels.

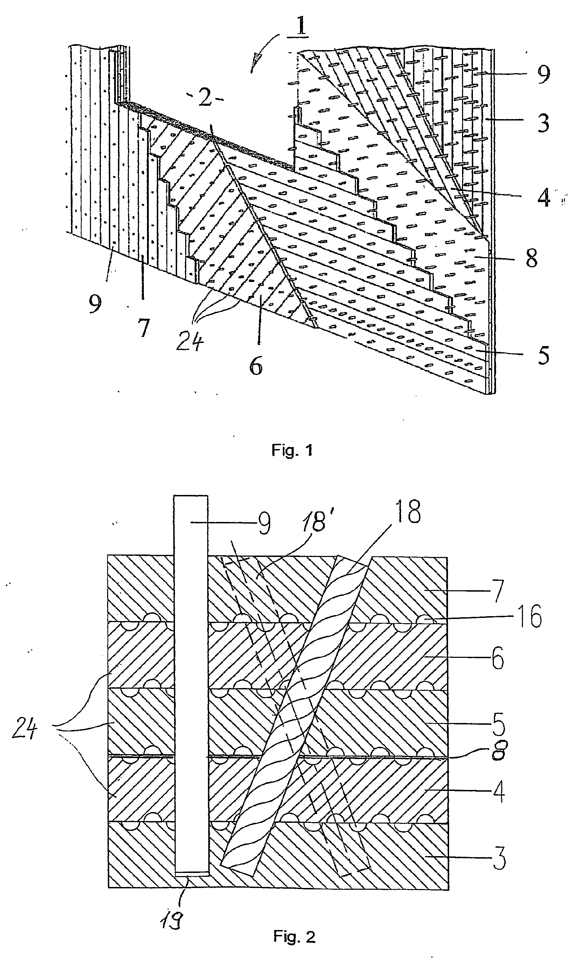

Wie in Figur 1 dargestellt, besteht ein insgesamt mit 1 bezeichnetes Schichtverbundelement aus insgesamt fünf verschiedenen Lagen 3 bis 7. Das Schichtverbundelement ist mit einem Fensterausschnitt 2 versehen. Jede Lage besteht aus unmittelbar nebeneinander angeordneten brettartigen Hölzern 24, wobei die Hölzer der benachbarten Lagen in unterschiedlichen Richtungen verlaufen.

Die erste Lage 3 und die fünfte Lage 7 sind jeweils als Aussenlagen ausgebildet und könnten beispielsweise aus einem anderen Holz bestehen und/oder eine feinere Oberflächenbearbeitung aufweisen. Unter dem Ausdruck Holz im Sinne dieser Anmeldung sind im Übrigen auch andere cellulosehaltige oder holzartige Werkstoffe wie z.B. Bambus, Weichfaserplatte oder dergleichen zu verstehen.

Zwischen der zweiten Lage 4 und der dritten Lage 5 ist eine dampfdiffusionsfähige Zwischenschicht 8 beispielsweise aus Filz angeordnet. Sämtliche Lagen werden durch Dübel 9 zusammengehalten, welche vorzugsweise in einem regelmässigen Muster eingesetzt sind. Die einzelnen Hölzer können seitlich durch Nut und Kamm bzw. durch Nut- und Federverbindungen aneinander liegen.

Figur 2 zeigt einen vergrösserten Querschnitt durch die vorgehend erwähnten insgesamt fünf Lagen 3 bis 7. Wie dargestellt, können die Dübel 9 im rechten Winkel zu den einzelnen Lagen eingetrieben sein, wobei die Bohrlöcher 19 die erste Lage 3 nicht vollständig durchdringen. Es ist aber auch eine kreuzweise Anordnung der Dübel möglich, wie dies durch die Dübel 18, 18' angedeutet ist. Bei einer derartigen Anordnung wird ersichtlicherweise eine formschlüssige Verbindung der einzelnen Lagen erzielt. Der Dübel 18 ist mit einer schraubenlinienförmigen Profilierung auf der Aussenseite versehen, welche das Eintreiben erleichtert. Derartige Dübel sind an sich bereits seit langem bekannt und beispielsweise bereits in der FR 2 301 441 beschrieben. Wie dargestellt, durchdringen die Dübel auch die Zwischenschicht 8.

Aus Figur 2 ist ferner ersichtlich, dass die einander zugewandten Oberflächen der Hölzer 24 mit muldenartigen Vertiefungen versehen sind. Im Verbund bilden diese Vertiefungen geschlossene Taschen, in denen Luft eingeschlossen ist. Bei Verwendung von komprimierbarem Vliesmaterial kann das Vliesmaterial nach Zusammenpressen der Lagen die Vertiefungen wenigstens teilweise ausfüllen (nicht gezeigt). Hierzu könnte vorteilhaft ein Vliesmaterial verwendet werden, dessen Dicke in der Ruhelage (d.h. vor der Pressung) vergleichsweise gross wäre. Vorzugsweise entspräche die Dicke wenigstens etwa der Tiefe der muldenartigen Vertiefungen.

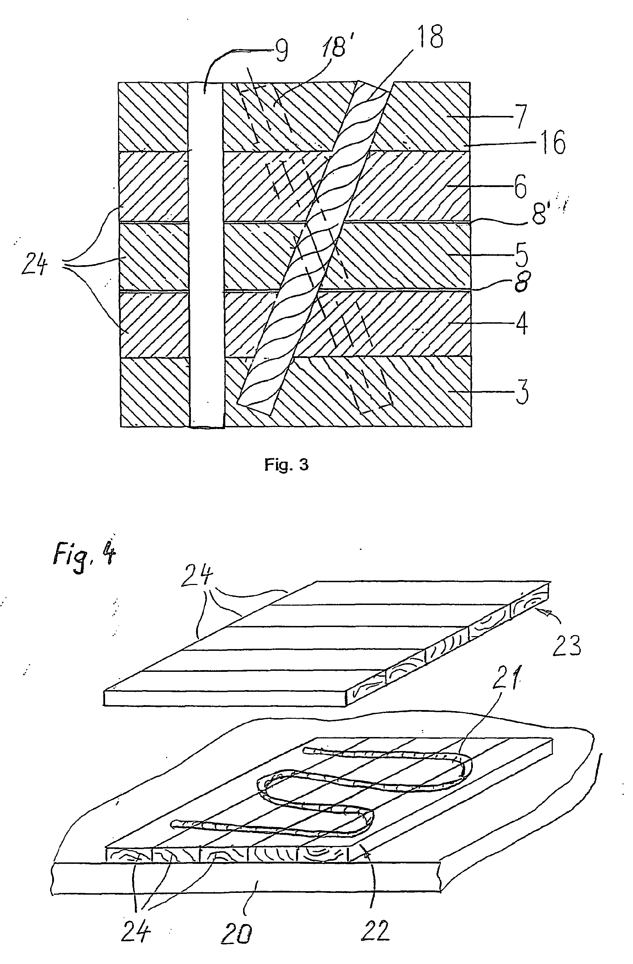

Figur 3 zeigt ein Schichtverbundelement mit zwei Zwischenschichten 8 und 8', die auf unterschiedlichen Ebenen liegen. Selbstverständlich könnte je nach Anforderung an das Schichtverbundelement zwischen jeder Lage jeweils eine Zwischenschicht vorgesehen sein. Diese Zwischenschichten müssen jedoch nicht gleichartig ausgebildet sein.

Wie in Figur 4 dargestellt, werden die geprägten (oder ungeprägten) Hölzer lagenweise auf einer Arbeitsfläche 20 gestapelt. Dargestellt ist hier eine erste Rohlage 22, auf welche eine zweite Rohlage 23 abgelegt werden soll. Nach der Ablage der ersten Rohlage 22 wird mit einer geeigneten Dispenservorrichtung ein flüssiges oder pastöses Haftmittel, beispielsweise Melasse, derart verteilt, das auf jedem einzelnen Holz in bestimmten Bereichen eine Teilmenge des Haftmittels 21 vorhanden ist. Ein mäanderartiger Auftrag hat sich dabei als vorteilhaft erwiesen. Anschliessend werden die Hölzer der zweiten Rohlage 23 auf die erste Rohlage 22 abgesetzt, wobei sich ersichtlicherweise das Haftmittel 21 wenigstens teilweise zu einem dünnen Film verteilt. Durch Erschütterungen oder geringfügige Krafteinwirkungen ist jetzt eine Verschiebung der beiden Lagen relativ zueinander erschwert. Beim Einlegen der oben erwähnten Zwischenschicht wird genau gleich verfahren, das heisst auch die Zwischenschicht wird zunächst mit Haftmittel fixiert und anschliessend wird wiederum die Oberfläche der Zwischenschicht mit Haftmittel beschichtet. Nach dem Aufbau der letzten Lage erfolgt die Einspannung im Bohrwerk und das aufeinander folgende Bohren der Dübellöcher und Einsetzen der Dübel. Die in den Figuren 1 bis 3 gezeigten Schichtverbundelemente können selbstverständlich grundsätzlich auch ohne Verwendung von Haftmitteln hergestellt werden. Bei geeigneten Fertigungsanlagen ist eine provisorische Fixierung nicht unbedingt nötig.

Zur weiteren Erhöhung insbesondere des Wärmedämmwerts des Schichtverbundelements können die Hölzer und/oder das Schichtverbundelement als Ganzes durch ein (nicht gezeigtes) Kalkbad geführt werden. Das Kalkbad kann mit Kalkwasser oder mit Kalkmilch gefüllt sein. Damit wären die Hölzer und/oder das Schichtverbundelement mit einer Schutzschicht enthaltend Kalk überzogen oder mit Kalk imprägniert. Statt eines Kalkbads könnten selbstverständlich auch Düsen verwendet werden.

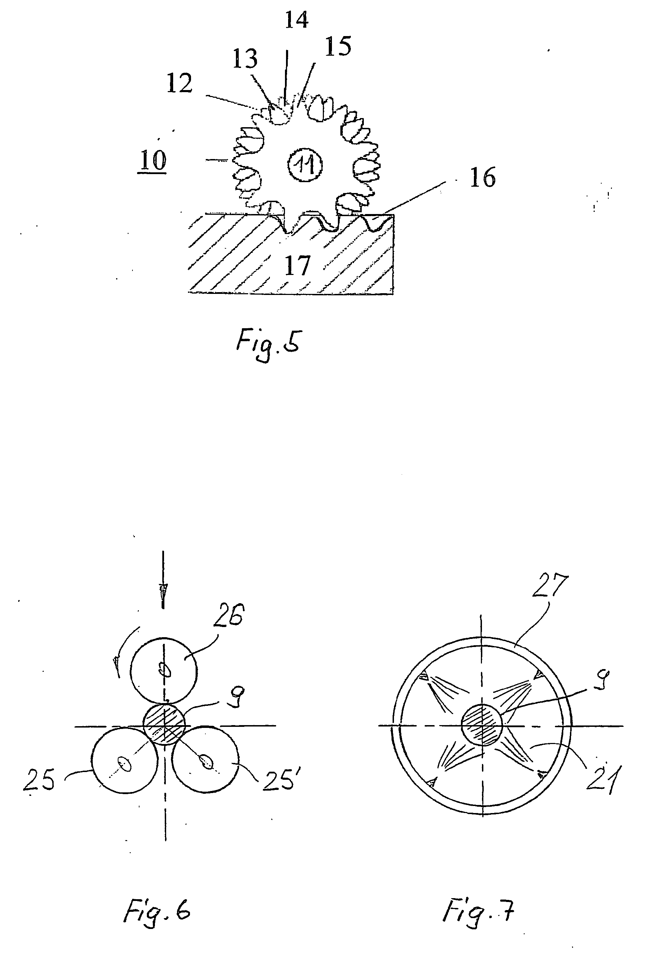

Figur 5 zeigt eine Seitenansicht einer Prägewalze 10, mit welcher die erwähnten Mulden an den einzelnen Bretter 17 angebracht werden können. Die Prägewalze besteht aus einer Vielzahl von mit einzelnen Zähnen versehenen Prägerädern 12 bis 15, welche auf einer Welle 11 sitzen. Die Zähne der einzelnen Räder sind jeweils versetzt zueinander angeordnet. Breite, Konfiguration und Eindringtiefe der einzelnen Zähne können je nach Verwendungszweck variieren. Das Einprägen der Mulden bewirkt gleichzeitig eine Verdichtung und einen teilweisen Bruch von Holzfasern. Das Prägen der Vertiefungen erfolgt abgestimmt auf den Nutzungszweck auf einer Durchlaufmaschine, ähnlich einer Dickenhobelmaschine. Die einzelnen Hölzer werden dabei einseitig, wahlweise zweiseitig bearbeitet. Das teilweise Durchtrennen der Fasern hat den Vorteil, dass sich diese bei einer allfälligen Feuchtigkeitsaufnahme nicht wieder aufrichten können.

Die Dübel werden vor dem Einsetzen in ihrem Durchmesser verdichtet, wie aus Figur 6 ersichtlich ist. Ein Dübel 9 liegt dabei im Zwickel zwischen zwei Lagerwalzen 25 und 25' und wird von einer angetriebenen Presswalze 26 beaufschlagt. Der Dübel wird dabei zwischen den Walzen abgerollt und um ein paar zehntel Millimeter verdichtet.

Unmittelbar nachfolgend wird der Dübel gemäss Figur 7 durch eine Ringdüse 27 geführt, wo er mit flüssigem Haftmittel 21 besprüht wird. In diesem vorbearbeiteten Zustand wird der Dübel in das Bohrloch 19 eingeführt, dessen Durchmesser derart auf den verdichteten Dübel abgestimmt ist, dass sich der Dübel bei einer Wiederausdehnung im Bohrloch verspannt.

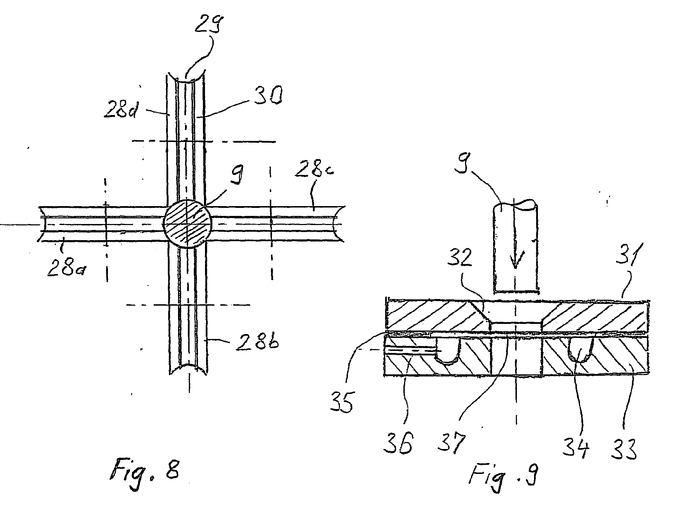

In Figur 8 ist eine alternative Methode zur Verdichtung eines Dübels 9 dargestellt. Der Dübel wird dabei von insgesamt vier Presswalzen 28a, 28b, 28c, 28d beaufschlagt, deren Drehachsen im rechten Winkel zur Längsmittelachse des Dübels 9 verlaufen. Die Walzenstirnseiten 29 sind konvex gekrümmt ausgebildet, wobei die Krümmung etwa dem Dübelradius entspricht. Auf den Walzen sind ausserdem Rippen 30 angeordnet, welche an der Dübeloberfläche parallele Rillen verursachen. Die Presswalzen sind gegen das Zentrum des Dübels vorgespannt und drehen sich gleichsinnig, sodass ein Dübel durch das Walzenquartett hindurch geführt und dabei verdichtet wird.

In Figur 9 ist ausserdem eine alternative Methode für die Oberflächenbeschichtung eines Dübels dargestellt. Der Dübel wird dabei nicht besprüht, sondern mit einem Flüssigfilm beschichtet. Die Anordnung besteht aus einer Einführplatte 31, welche eine Einführöffnung 32 für den Dübel 9 aufweist. Eine Kanalplatte 33 ist derart gegen die Einführplatte 31 gepresst, dass ein die Einführöffnung 32 umgebender Ringspalt 37 verbleibt. Dieser Ringspalt mündet aussen in einen Ringkanal 34, der mittels einer Dichtung 35 abgedichtet ist. Über einen Zufuhrkanal 36 kann Haftmittel in den Ringkanal 34 eingespeist werden, das von dort aus als Film gegen die Einführöffnung 32 gepresst wird. Ein durch die Einführöffnung durchgeschobener Dübel 9 wird so ersichtlicherweise mit einem Haftmittelfilm beschichtet. Eine derartige Anordnung ist besonders geeignet für Zähflüssige Haftmittel, die sich nicht aus einer Sprühdüse ausstossen lassen.

## Patentansprüche

1. Schichtverbundelement (1) bestehend aus mehreren Lagen (3 bis 7) von nebeneinander angeordneten, länglichen, insbesondere brettartigen Hölzern (24), wobei die Hölzer von wenigstens zwei benachbarten Lagen unterschiedliche Richtungen aufweisen und wobei die Lagen mit Holzdübeln (9, 18) durchsetzt sind, **dadurch gekennzeichnet, dass** wenigstens zwischen zwei Lagen eine dampfdiffusionsfähige Zwischenschicht (8) aus einem Faservlies oder aus einem Gewebe oder aus Papier oder aus Karton angeordnet ist, dass die Holzdübel im Durchmesser mechanisch verdichtet sind und dass sie die Zwischenschicht durchdringen.

2. Schichtverbundelement nach Anspruch 1, **dadurch gekennzeichnet, dass** die Zwischenschicht elektrisch leitfähig und/oder elektromagnetische Strahlung abschirmend ausgebildet ist.

3. Schichtverbundelement nach einem der Ansprüche 1 oder 2, **dadurch gekennzeichnet, dass** wenigstens zwei Zwischenschichten (8, 8') vorgesehen sind, die zwischen zwei verschiedenen Lagen angeordnet sind.

4. Schichtverbundelement nach Anspruch 3, **dadurch gekennzeichnet, dass** die wenigstens zwei Zwischenschichten (8, 8') hinsichtlich Dicke und/oder Materialzusammensetzung unterschiedlich aufgebaut sind.

5. Schichtverbundelement nach einem der Ansprüche 1 bis 4, **dadurch gekennzeichnet, dass** die Hölzer und/oder das Schichtverbundelement als Ganzes durch Beaufschlagung einer Kombination enthaltend Wasser und Kalk behandelt sind.

6. Schichtverbundelement nach einem der Ansprüche 1 bis 5, **dadurch gekennzeichnet, dass** zwischen den einander zugewandten Oberflächen der Lagen ein die Lagen zusätzlich verbindendes Haftmittel (21) eingebracht ist.

7. Schichtverbundelement nach einem der Ansprüche 1 bis 6, **dadurch gekennzeichnet, dass** wenigstens die Hölzer (24) einer Lage auf einer innen liegenden Seite mit muldenartigen Vertiefungen (16) versehen sind.

8. Schichtverbundelement nach einem der Ansprüche 1 bis 7, **dadurch gekennzeichnet, dass** die Holzdübel zum Erzielen eines formschlüssigen Verbundes der Lagen diese in unterschiedlichen Richtungen durchdringen.

9. Schichtverbundelement nach einem der Ansprüche 1 bis 8, **dadurch gekennzeichnet, dass** die Holzdübel einen profilierten Aussenmantel aufweisen.

10. Schichtverbundelement nach einem der Ansprüche 1 bis 9, **dadurch gekennzeichnet, dass** die Zwischenschicht aus einem komprimierbaren Vliesmaterial besteht.

11. Schichtholzelement nach einem der Ansprüche 1 bis 10, **dadurch gekennzeichnet, dass** die Holzdübel eine aussenliegende Lage nur teilweise durchdringen.

12. Verfahren zum Herstellen eines Schichtverbundelements (1) aus mehreren Lagen (3 bis 7) von nebeneinander angeordneten, länglichen, insbesondere brettartigen Hölzern (24), wobei die Hölzer von wenigstens zwei benachbarten Lagen unterschiedliche Richtungen aufweisen und wobei die Lagen nach dem Auslegen auf einer Arbeitsfläche (20) mit Holzdübeln (9, 18) durchsetzt werden, **dadurch gekennzeichnet, dass** wenigstens zwischen zwei Lagen eine dampfdiffusionsfähige Zwischenschicht (8) aus einem Faservlies oder aus einem Gewebe oder aus Papier oder aus Karton eingelegt wird, dass die Holzdübel vor dem Einpressen mechanisch verdichtet werden und dass sie die Zwischenschicht durchringen.

13. Verfahren nach Anspruch 12, **dadurch gekennzeichnet, dass** die Hölzer vor dem Auslegen, die ausgelegten Hölzer und/oder das Schichtverbundelement mit einer Kombination enthaltend Wasser und Kalk beaufschlagt werden bzw. wird.

14. Verfahren nach Anspruch 12 oder 13, **dadurch gekennzeichnet, dass** für die provisorische Lagefixierung der Hölzer (24) beim Aufbau der Lagen und vor dem Einbringen der Verbindungsmittel ein Haftmittel (21) in flüssiger oder pastöser Form auf bzw. zwischen einander zugewandte Oberflächen der Lagen eingebracht wird.

## Claims

1. Laminated element (1), comprising a number of plies (3 to 7) of elongated, in particular board-like wood strips (24) arranged next to one another, wherein the wood strips of at least two adjacent plies have different directions and wherein the plies are passed through by wooden pegs (9, 18), **characterized in that** at least between two plies there is arranged an intermediate layer (8) capable of vapour diffusion and composed of a fibrous nonwoven fabric or of a woven fabric or of paper or of card, **in that** the wooden pegs are mechanically compressed in diameter and **in that** they penetrate through the intermediate layer.

2. Laminated element according to Claim 1, **characterized in that** the intermediate layer is formed so as to be electrically conductive and/or so as to shield electromagnetic radiation.

3. Laminated element according to either of Claims 1 and 2, **characterized in that** at least two intermediate layers (8, 8') are provided, arranged between two different plies.

4. Laminated element according to Claim 3, **characterized in that** the at least two intermediate layers (8, 8') are differently constructed with respect to thickness and/or material composition.

5. Laminated element according to one of Claims 1 to 4, **characterized in that** the wood strips and/or the laminated element as a whole are/is treated by being subjected to a combination comprising water and lime.

6. Laminated element according to one of Claims 1 to 5, **characterized in that** between the mutually facing surfaces of the plies there is an introduced adhesive agent (21) additionally joining the plies.

7. Laminated element according to one of Claims 1 to 6, **characterized in that** at least the wood strips (24) of one ply are provided on an inner side with dish-like depressions (16).

8. Laminated element according to one of Claims 1 to 7, **characterized in that**, to achieve lamination of the plies with positively locking engagement, the wooden pegs penetrate through them in different directions.

9. Laminated element according to one of Claims 1 to 8, **characterized in that** the wooden pegs have a profiled outer lateral surface.

10. Laminated element according to one of Claims 1 to 9, **characterized in that** the intermediate layer is composed of a compressible nonwoven material.

11. Laminated element according to one of Claims 1 to 10, **characterized in that** the wooden pegs only partially penetrate through an outer ply.

12. Method for manufacturing a laminated element (1) from a number of plies (3 to 7) of elongated, in particular board-like wood strips (24) arranged next to one another, wherein the wood strips of at least two adjacent plies have different directions and wherein the plies have wooden pegs (9, 18) passed through them after being laid out on a work surface (20), **characterized in that** an intermediate layer (8) capable of vapour diffusion and composed of a fibrous nonwoven fabric or of a woven fabric or of paper or of card is placed at least between two plies, **in that** the wooden pegs are mechanically compressed before pressing in and **in that** they penetrate through the intermediate layer.

13. Method according to Claim 12, **characterized in that** the wood strips before they are laid out, the laid-out wood strips and/or the laminated element are or is subjected to a combination comprising water and lime.

14. Method according to Claim 12 or 13, **characterized in that**, for the provisional positional fixing of the wood strips (24) during the building up of the plies and before the introduction of the connecting means, an adhesive agent (21) in liquid or pasty form is introduced onto or between mutually facing surfaces of the plies.

## Revendications

1. Elément composite stratifié (1) constitué de plusieurs couches (3 à 7) de bois (24) allongés, en particulier en forme de planche, disposés les uns à côté des autres, les bois d'au moins deux couches voisines présentant des orientations différentes et les couches étant traversées par des chevilles à bois (9, 18),
**caractérisé en ce que**
une couche intermédiaire (8) perméable à la diffusion de vapeur, en feutre de fibres, en tissu, en papier ou en carton, est disposée entre au moins deux couches, les chevilles à bois étant comprimées mécaniquement dans le sens de leur diamètre et traversant la couche intermédiaire.

2. Elément composite stratifié selon la revendication 1, **caractérisé en ce que** la couche intermédiaire est électriquement conductrice et/ou exerce un effet de blindage contre le rayonnement électromagnétique.

3. Elément composite stratifié selon l'une des revendications 1 ou 2, **caractérisé en ce qu'**il présente au moins deux couches intermédiaires (8, 8') disposées entre deux couches différentes.

4. Elément composite stratifié selon la revendication 3, **caractérisé en ce que** les deux ou plusieurs couches intermédiaires (8, 8') diffèrent les nes des autres par leur épaisseur et/ou la composition de leur matériau.

5. Elément composite stratifié selon l'une des revendications 1 à 4, **caractérisé en ce que** les bois et/ou l'élément composite stratifié sont traités en tant qu'entités par application d'une composition qui contient de l'eau et de la chaux.

6. Elément composite stratifié selon l'une des revendications 1 à 5, **caractérisé en ce qu'**un agent adhésif (21) supplémentaires qui relie les couches est placé entre les surfaces tournées l'une vers l'autre des couches.

7. Elément composite stratifié selon l'une des revendications 1 à 6, **caractérisé en ce que** les bois (24) d'au moins une couche sont dotés de creux (16) en forme de moulure sur leur face située à l'intérieur.

8. Elément composite stratifié selon l'une des revendications 1 à 7, **caractérisé en ce que** les chevilles à bois traversent les couches dans différentes directions pour obtenir un composite à correspondance géométrique.

9. Elément composite stratifié selon l'une des revendications 1 à 8, **caractérisé en ce que** l'enveloppe extérieure des chevilles à bois est profilée.

10. Elément composite stratifié selon l'une des revendications 1 à 9, **caractérisé en ce que** la couche intermédiaire est constituée d'un matériau de feutre compressible.

11. Elément en bois stratifié selon l'une des revendications 1 à 10, **caractérisé en ce que** les chevilles à bois ne traversent que partiellement une couche extérieure.

12. Procédé de fabrication d'un élément composite stratifié (1) en plusieurs couches (3 à 7) de bois allongés (24), en particulier en forme de planche, disposés les uns à côté des autres, les bois d'au moins deux couches voisines présentant des orientations différentes et les couches étant traversées par des chevilles à bois (9, 18) après avoir été posées sur une surface de travail (20),
**caractérisé en ce que**
une couche intermédiaire (8) perméable à la diffusion de vapeur, en feutre de fibres, en tissu, en papier ou en carton est insérée entre au moins deux couches et **en ce que** les chevilles à bois sont comprimées mécaniquement avant le pressage et traversent la couche intermédiaire.

13. Procédé selon la revendication 12, **caractérisé en ce qu'**avant la pose, les bois posés et/ou l'élément composite stratifié sont traités avec une combinaison qui contient de l'eau et de la chaux.

14. Procédé selon les revendications 12 ou 13, **caractérisé en ce qu'**une couche adhésive (21) sous forme liquide ou pâteuse est placée sur ou entre des surfaces tournées l'une vers l'autre des couches pour immobiliser provisoirement les bois (24) lors de la formation des couches et avant le placement des moyens de liaison.
